# EUROPÄISCHE PATENTSCHRIFT

(11) **EP 3 389 940 B1**
(45) Veröffentlichungstag und Bekanntmachung des Hinweises auf die Patenterteilung: **27.01.2021**
(21) Anmeldenummer: 16777665.7
(22) Anmeldetag: 04.10.2016
(51) Int. Cl.: B25F 5/00, B25F 5/02

(54) **HANDWERKZEUGMASCHINE MIT EINEM FILTERTRÄGER**
HAND-HELD POWER TOOL COMPRISING A FILTER SUPPORT
MACHINE-OUTIL PORTATIVE POURVUE D'UN PORTE-FILTRE

(30) Priorität: 17.12.2015 DE 102015225748; 25.07.2016 DE 102016213618
(43) Veröffentlichungstag der Anmeldung: 24.10.2018
(73) Patentinhaber: Robert Bosch GmbH, 70442 Stuttgart (DE)
(72) Erfinder: ESENWEIN, Florian, 70771 Leinfelden-Echterdingen (DE); STIERLE, Peter, 72124 Pliezhausen (DE); LUTZ, Manfred, 70794 Filderstadt (DE); SCHOMISCH, Thomas, 70794 Filderstadt (DE)
(86) Internationale Anmeldenummer: PCT/EP2016/073598
(87) Internationale Veröffentlichungsnummer: WO 2017/102126

(56) Entgegenhaltungen:
- EP-A1- 2 944 423
- WO-A1-2015/066759
- CH-A- 336 121
- DE-U1-202005 007 594
- JP-A- S5 849 066
- JP-A- 2002 283 255
- JP-A- 2010 036 260
- US-A1- 2005 281 627
- US-A1- 2009 095 249

## Beschreibung

### Stand der Technik

Die Erfindung betrifft eine Handwerkzeugmaschine gemäß dem Oberbegriff des Anspruchs 1.

In DE 10 2008 009 277 A1 ist ein Elektrohandwerkzeuggerät mit einem die elektromotorischen Antriebskomponenten aufnehmenden Gehäusekörper, in welchem auch Lufteintrittsöffnungen für einen die elektromotorischen Antriebskomponenten beaufschlagenden Kühlluftstrom vorgesehen sind. Weiterhin ist das Gerät so ausgebildet, dass im Bereich der Lufteintrittsöffnungen ein Filtermittel vorgesehen ist, mittels dessen insbesondere Magnetisierungsstaub von den elektromotorischen Antriebskomponenten ferngehalten werden kann. Andere Beispiele sind aus der EP2944423A1, CH336121A, JP2002283255A oder US2005281627A1 bekannt.

### Offenbarung der Erfindung

Aus dem Stand der Technik ergibt sich die Aufgabe, eine Handwerkzeugmaschine mit einem Filterträger bereitzustellen, wobei der Filterträger einfach von der Handwerkzeugmaschine lösbar ist.

Die Erfindung, wie in Ansprüche 1 und 14 dargestellt, betrifft eine Handwerkzeugmaschine mit einem Gehäuse und mit einem Filterträger. Der Filterträger ist lösbar befestigbar an der Handwerkzeugmaschine ausgebildet. Die Handwerkzeugmaschine kann beispielhaft als ein Winkelschleifer, eine Bohrmaschine, ein Bohrhammer, ein Exzenterschleifer, eine Fräse, eine Schleifmaschine etc. ausgebildet sein. Die Handwerkzeugmaschine kann des Weiteren als eine Netz betriebene Handwerkzeugmaschine oder als eine Akku betrieben Handwerkzeugmaschine ausgebildet sein. In dem Gehäuse der Handwerkzeugmaschine kann ein Motor, insbesondere ein Elektromotor, aufgenommen sein. Der Motor ist dazu ausgebildet, eine Antriebswelle anzutreiben. Weiterhin weist die Handwerkzeugmaschine ein Werkzeug auf, welches beispielhaft über ein Getriebe mit der Antriebswelle des Elektromotors verbunden sein kann. Die Handwerkzeugmaschine weist eine Gehäuseachse auf, die die Werkzeugachse oder die Antriebsache der Handwerkzeugmaschine darstellen kann. Die Antriebsachse der Handwerkzeugmaschine wird insbesondere durch die Antriebswelle des Motors der Handwerkzeugmaschine definiert. Die Werkzeugachse der Handwerkzeugmaschine wird insbesondere durch eine Abtriebswelle der Handwerkzeugmaschine, welche zur Drehmomentübertragung auf ein Werkzeug der Handwerkzeugmaschine ausgebildet ist, definiert. Der Filterträger umfasst ein Filterträgerelement, welches zumindest eine Aufnahmeöffnung aufweist, die dazu ausgebildet ist ein Filterelement aufzunehmen. Die Aufnahmeöffnung des Filterträgers kann vorteilhaft derart im Bereich einer Lufteingangsöffnung der Handwerkzeugmaschine angeordnet sein, dass ein Luftstrom, insbesondere ein Kühlluftstrom, ausschließlich durch die Aufnahmeöffnung in die Handwerkzeugmaschine eindringen kann. Das Filterträgerelement des Filterträgers kann vorteilhaft aus einem formstabilen Kunststoff ausgebildet sein. Der Filterträger kann einteilig oder mehrteilig ausgebildet sein. Das Filterelement des Filterträgers kann vorteilhaft derart in der Aufnahmeöffnung des Filterträgers angeordnet sein, dass durch das Filterelement ein Eindringen von Werkstoffpartikel und Staub in das Gehäuse der Handwerkzeugmaschine verhindert wird. Das Filterelement des Filterträgers kann aus einem staubdichten Material ausgebildet sein. Das Filterelement kann insbesondere aus einem Kunststoff-, Stoff- oder Metallgewebe beziehungsweise Kunststoff- oder Metallnetz sowie einem Vlies ausgebildet sein. Das Filterelement kann insbesondere durch Einspritzen, Einkleben, Einklipsen, Einlegen, Heißprägen oder Ultraschallschweißung mit dem Filterträgerelement des Filterträgers verbunden sein. Der Filterträger umfasst zumindest ein erstes Befestigungselement und zumindest ein zweites Befestigungselement, zur lösbaren formschlüssigen und/oder kraftschlüssigen Befestigung des Filterträgers an jeweils korrespondierende Sicherungselemente der Handwerkzeugmaschine. Insbesondere kann das erste Befestigungselement des Filterträgers mit einem ersten Sicherungselement der Handwerkzeugmaschine und das zweite Befestigungselement des Filterträgers mit einem zweiten Sicherungselement der Handwerkzeugmaschine lösbar verbindbar ausgebildet sein. Der Filterträger ist mit der Handwerkzeugmaschine insbesondere formschlüssig und/oder kraftschlüssig verbindbar ausgebildet.

Des Weiteren ist der Filterträger über eine Betätigung einer Betätigungseinheit lösbar befestigbar mit der Handwerkzeugmaschine ausgebildet. Die Betätigungseinheit kann dem Filterträger oder der Handwerkzeugmaschine zugeordnet sein. Die Betätigungseinheit ist insbesondere manuell oder werkzeuglos betätigbar ausgebildet. Die Betätigungseinheit ist vorteilhaft für einen Nutzer der Handwerkzeugmaschine mit einem Filterträger leicht zugänglich angeordnet. Insbesondere kann die Betätigungseinheit an der äußeren Umfangsfläche des Filterträgers oder des Gehäuses der Handwerkzeugmaschine angeordnet sein.

Das erste Befestigungselement des Filterträgers und das zweite Befestigungselement des Filterträgers können an gegenüberliegenden Endbereichen des Filterträgers angeordnet sein. Unter Endbereichen des Filterträgers sollen insbesondere die Seitenkanten des Filterträgers oder die unmittelbare Umgebung der Seitenkanten des Filterträgers verstanden werden. Es ist auch denkbar, dass zwei erste oder zwei zweite Befestigungselemente des Filterträgers an gegenüberliegenden Endbereichen angeordnet sind. Dies hat eine sichere Befestigung des Filterträgers an der Handwerkzeugmaschine zur Folge.

Weiterhin kann der Filterträger dazu ausgebildet sein, im Wesentlichen entlang einer Gehäuseachse der Handwerkzeugmaschine aufbringbar zu sein. Insbesondere erfolgt das Aufbringen des Filterträgers an die Handwerkzeugmaschine coaxial zu der Gehäuseachse der Handwerkzeugmaschine. Alternativ kann der Filterträger im wesentlich auch quer zu der Gehäuseachse der Handwerkzeugmaschine aufbringbar ausgebildet sein.

Das erste und/oder das zweite Befestigungselement des Filterträgers können als ein Formschlusselement ausgebildet ist. Das Formschlusselement kann beispielhaft als ein hakenförmiges Element, welches dazu ausgebildet ist in eine Öffnung einzugreifen ausgebildet sein. Alternativ kann das Formschlusselement auch als ein Bügel ausgebildet sein, der dazu ausgebildet ist, eine Erhebung zu umgreifen. Des Weiteren kann das Formschlusselement auch als ein Hinterschnittelement ausgebildet sein. Das erste und/oder das zweite Befestigungselement des Filterträgers können als ein Rastelement oder eine Rastaufnahmeöffnung, ausgebildet ist. Das Rastelement kann insbesondere als flexibles und/oder federndes Rastelement ausgebildet sein. Das Rastelement kann mit einer korrespondierenden Rastaufnahmeöffnung formschlüssig lösbar verbindbar ausgebildet sein. Die Rastverbindung erfolgt insbesondere selbsttätig und somit ohne eine Betätigung der Betätigungseinheit. Die Geometrie des Rastelements, insbesondere eine schwanenhalsförmige, torsion oder schnapphakenförmig Geometrie, ist vorteilhaft derart ausgebildet, dass das Rastelement durch die Geometrie federnd ausgebildet ist.

Das erste und/oder zweite Befestigungselement des Filterträgers können einstückig mit der Betätigungseinheit ausgebildet ist. Die Betätigungseinheit kann vorteilhaft in der Umgebung, insbesondere in der unmittelbaren Umgebung, der Befestigungselemente des Filterträgers angeordnet sein. Die Betätigungseinheit kann insbesondere auch benachbart oder unmittelbar benachbart zu den Befestigungselementen des Filterträgers angeordnet sein. Vorteilhaft kann die Betätigungseinheit ein für den Anwender sichtbare Struktur, insbesondere eine geriffelte Struktur aufweisen, die dem Anwender die Position, an der die Betätigung zu erfolgen hat, signalisiert.

Die Betätigungseinheit kann an dem Filterträger angeordnet sein.

Alternativ kann die Betätigungseinheit an der Handwerkzeugmaschine angeordnet sein.

Das erste Befestigungselement des Filterträgers kann als Rastelement ausgebildet sein und das zweite Befestigungselement des Filterträgers kann als ein Formschlusselement, insbesondere einem Führungselement, ausgebildet sein, das dazu ausgebildet ist, den Filterträger beim Aufbringen an die Handwerkzeugmaschine zu führen und zusätzlich an der Handwerkzeugmaschine radial zu sichern und zu positionieren. Die ermöglicht ein erleichtertes Aufbringen des Filterträgers an die Handwerkzeugmaschine für einen Anwender.

Der Filterträger kann im Wesentlichen U-förmig ausgebildet sein. Alternativ kann der Filterträger auch derart schalenförmig ausgebildet sein, dass er die äußere Umfangsfläche der Handwerkzeugmaschine im Wesentlichen zumindest teilweise, insbesondere in einem Winkelbereich von kleiner als 270° umschließt oder umgreift. Zusätzlich kann der Filterträger auch dazu ausgebildet sein, die Rückseite der Handwerkzeugmaschine zumindest teilweise abzudecken. Der Filterträger kann aus einem hart-elastischen Kunststoff, beispielsweise TPE oder Polyamid, und/oder einem formstabilen Material ausgebildet sein. Insbesondere kann das zumindest eine Filterträgerelement des Filterträgers derart formstabil ausgebildet sein, dass der Filterträger beim Aufbringen auf die Handwerkzeugmaschine biegestabil ausgebildet ist. Die einzelnen Komponente des Filterträgers, das Filterträgerelement, das zumindest eine Filterelement und das erste und das zweite Befestigungselement können, einstückig oder mehrstückig ausgebildet sein.

Der Filterträger kann ein elastisches Element aufweisen, wobei das elastische Element dazu ausgebildet ist, den Filterträger an der Handwerkzeugmaschine in zumindest einer Richtung über eine Verspannung zu sichern. Der Filterträger kann insbesondere entgegen der Aufbringrichtung des Filterträgers an die Handwerkzeugmaschine vorgespannt werden. Vorteilhaft ist das elastische Element an der Rückseite oder an der inneren Seitenfläche des Filterträgerelements des Filterträgers angeordnet. Durch die über das elastische Element des Filterträgerelements ausgeübte Vorspannung, kann der Filterträger im Wesentlichen spielfrei mit der Handwerkzeugmaschine befestigt werden. Das elastische Element des Filterträgers ist insbesondere einstückig mit dem Filterträgerelement des Filterträgers ausgebildet. Das elastische Element des Filterträgers kann beispielhaft aus einem Kunststoffmaterial ausgebildet sein, das eine deutlich höhere Elastizität als das Filterträgerelement des Filterträgers aufweist. Alternativ kann das elastische Element auch durch die Geometrie des Filterträgerelements des Filterträgers realisiert werden. Beispielhaft kann das Filterträgerelement des Filterträgers in Aufbringrichtung zumindest teilweise schwanenhalsförmig oder wellenförmig ausgebildet sein. Insbesondere kann das zweite Befestigungselement des Filterträgers als ein elastisches Element ausgebildet sein. In dieser Ausführungsform können das zweite Befestigungselement des Filterträgers und das zweite Sicherungselement der Handwerkzeugmaschine als federnde Stützelemente oder Federelemente, insbesondere Kunststofffederelemente, ausgebildet sein. Für eine detaillierte Offenbarung für diese Befestigungsart wird auf DE 10 2009 026519 A1 verwiesen. In dieser Ausführungsform ist vorteilhaft das zweite Befestigungselement des Filterträgers oder das zweite Sicherungselement der Handwerkzeugmaschine quer zu der Aufbringrichtung elastisch verformbar ausgebildet. Das zweite Befestigungselement des Filterträgers kann vorteilhaft an der der Handwerkzeugmaschine zugewandten Seitenfläche des Filterträgers angeordnet sein.

Ferner kann das elastische Element entlang der Aufbringrichtung des Filterträgers an die Handwerkzeugmaschine derart elastisch verformbar sein, dass erst durch die Verformung des elastischen Elements, insbesondere einer axialen Verlängerung des elastischen Elements, zumindest eines der ersten Befestigungselemente des Filterträgers und eines der ersten Sicherungselemente der Handwerkzeugmaschine verbindbar sind. Insbesondere kann durch die Verformung des elastischen Elements eine lösbare Verbindung des ersten Befestigungselements des Filterträgers mit dem ersten Sicherungselement der Handwerkzeugmaschine realisiert werden. Zusätzlich kann auch das Filterelement des Filterträgers elastisch ausgebildet sein.

Das zu dem ersten oder zweiten Befestigungselement des Filterträgers korrespondierende Sicherungselement der Handwerkzeugmaschine kann als eine Lufteinlassöffnung der Handwerkzeugmaschine ausgebildet ist. Die Lufteinlassöffnung kann insbesondere zur radialen und/oder axialen Sicherung des Filterträgers an der Handwerkzeugmaschine ausgebildet sein. Hierzu kann das erste oder das zweite Befestigungselement des Filterträgers insbesondere als ein radial in Richtung des Handwerkzeugs angeordnete Erhebung ausgebildet sein. Insbesondere beaufschlagt die Erhebung des Filterträgers eine Seitenwand einer Lufteinlassöffnung der Handwerkzeugmaschine derart, dass der Filterträger axial und/oder radial an der Handwerkzeugmaschine gesichert ist.

Die Außenfläche des Filterträgers kann im montierten Zustand bündig mit der Außenfläche eines Gehäuses der Handwerkzeugmaschine ausgebildet sein. Insbesondere kann der Filterträger konturangepasst an die Außenfläche des Gehäuses der Handwerkzeugmaschine ausgebildet sein. Unter der Außenfläche des Filterträgers soll insbesondere die von der der Handwerkzeugmaschine abgewandte Seitenfläche des Filterträgers verstanden werden.

Es wird weiter in Anspruch 14 vorgeschlagen, dass der Filterträger um eine Drehachse schwenkbar an die Handwerkzeugmaschine anbringbar sein kann, wobei die Drehachse von einem Sicherungselement in Form eines Drehlagerelements der Handwerkzeugmaschine gebildet wird. Vorteilhaft kann dadurch eine besonders einfache und intuitive Anbringung des Filterträgers an die Handwerkzeugmaschine realisiert werden.

Zur schwenkbaren Anbringung des Filterträgers an die Handwerkzeugmaschine kann zumindest ein erste Befestigungselement als ein Rastelement ausgebildet sein und zumindest ein zweites Befestigungselement als ein hakenförmiges Drehlagerelement ausgebildet sein, wobei über das zweite Befestigungselement das Filterträgerelement an das korrespondierende Sicherungselement der Handwerkzeugmaschine, insbesondere einen angeformten Zapfen, einhängbar ist. Alternativ ist ebenfalls vorstellbar, dass das zweite Befestigungselement als Zapfen ausgebildet ist und das Sicherungselement als Drehlagerelement ausgebildet ist.

Insbesondere kann der Filterträger ein Anschlagelement aufweist, das dazu ausgebildet ist, die Schwenkbewegung zu begrenzen. Vorteilhaft kann dadurch das Filterträgerelement im befestigten Zustand nicht nach oben an der Befestigungsposition vorbei ausweichen. Besonders vorteilhaft ist der Filterträger dadurch nahezu spielfrei aufgenommen.

### Zeichnungen

Weitere Vorteile ergeben sich aus der folgenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig.1: Perspektivische Ansicht einer erfindungsgemäßen Handwerkzeugmaschine mit einem Filterträger.
Fig.2: Längsschnitt einer erfindungsgemäßen Handwerkzeugmaschine mit einem Filterträger.
Fig. 3: Perspektivische Ansicht einer alternativen Ausführungsform der erfindungsgemäßen Handwerkzeugmaschine mit einem Filterträger.
Fig. 3a: Längsschnitt eines Teilbereichs aus Fig. 3.
Fig. 4: Perspektivische Ansicht einer weiteren alternativen Ausführungsform der erfindungsgemäßen Handwerkzeugmaschine mit einem Filterträger.
Fig. 4a: Schnitt einer Seitenansicht eines Teilbereichs aus Fig. 4.
Fig. 5: Draufsicht auf eine alternative Ausführungsform einer Handwerkzeugmaschine mit einem Filterträger.
Fig. 5a: Seitenansicht einer alternativen Ausführungsform einer Handwerkzeugmaschine mit einem Filterträger.
Fig. 5b: Sicht durch die Ebene B auf die Stirnseite eines Filterträgers.
Fig. 5c: Sicht durch die Ebene A auf die Rückseite eines Filterträgers.
Fig. 5d: Ausschnitt eines Querschnitt des Filterträgers.
Fig. 5e: Draufsicht auf eine alternative Ausführungsform einer Handwerkzeugmaschine mit einem Filterträger.
Fig. 6: Draufsicht auf eine alternative Ausführungsform einer Handwerkzeugmaschine mit einem Filterträger.
Fig. 7a: Rückseite einer alternativen Ausführungsform eines Filterträgers.
Fig. 7b: Seitenansicht einer alternativen Ausführungsform eines Filterträgers.
Fig. 8a: Perspektivische Ansicht einer alternativen Ausführungsform eines Filterträgers an einer Handwerkzeugmaschine.
Fig. 8b: Querschnitt einer alternativen Ausführungsform eines Filterträgers an einer Handwerkzeugmaschine.
Fig. 8c: Schnitt einer Seitenansicht einer alternativen Ausführungsform eines Filterträgers.
Fig. 9a: Ausschnitt einer perspektivischen Ansicht einer alternativen Ausführung eine Filterträgers mit einer Handwerkzeugmaschine.
Fig. 9b: Längsschnitt einer alternativen Ausführung eine Filterträgers mit einer Handwerkzeugmaschine.
Fig. 10: Perspektivische Ansicht einer alternativen Ausführungsform eines Filterträgers an einer Handwerkzeugmaschine.
Fig. 11: Perspektivische Ansicht einer alternativen Ausführungsform eines Filterträgers.
Fig. 12: Perspektivische Ansicht einer alternativen Ausführungsform eines Filterträgers.
Fig. 12a: Perspektivische Ansicht einer alternativen Ausführungsform eines Filterträgers nach Fig. 12 im befestigen Zustand.

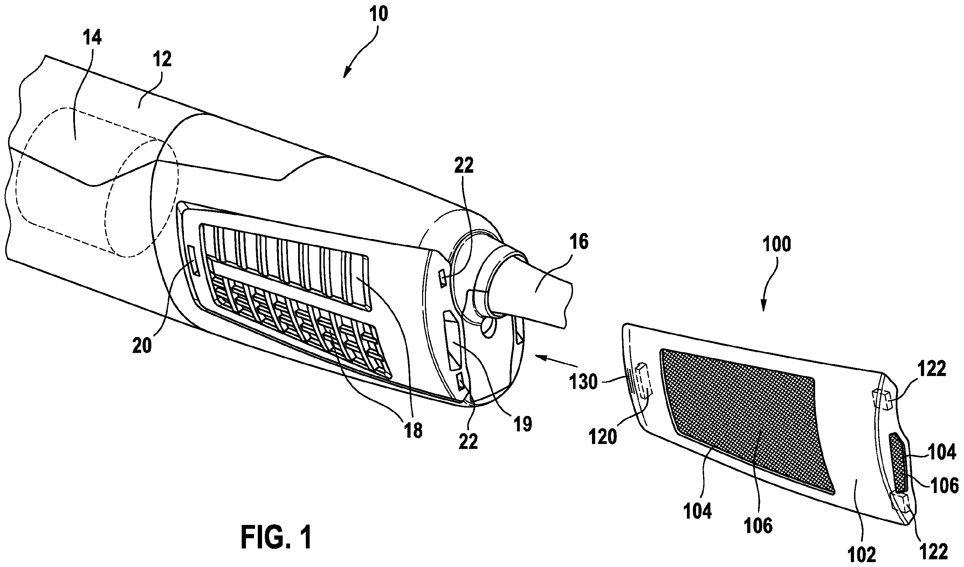

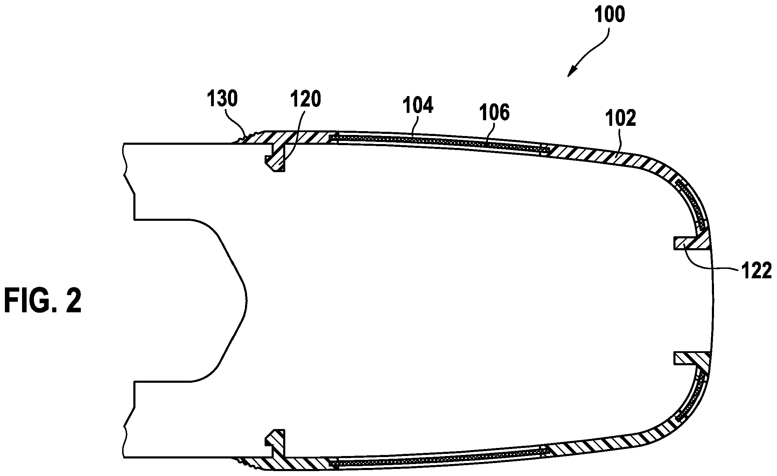

In Figur 1 ist eine perspektivische Ansicht einer erfindungsgemäßen Handwerkzeugmaschine 10 mit einem Filterträger 100 gezeigt, wobei der Filterträger 100 über eine Schwenkbewegung an die Handwerkzeugmaschine 10 anbringbar ist. In Figur 2 ist ein Längsschnitt des erfindungsgemäßen Filterträgers 100 gezeigt. Die Handwerkzeugmaschine 10 ist beispielhaft als ein Winkelschleifer ausgebildet. Die Handwerkzeugmaschine 10 weist ein Gehäuse 12 auf, in welchem ein Elektromotor 14 aufgenommen ist. Das Gehäuse 12 weist eine längliche, im Wesentlichen zylindrische Form auf. Auf der Gehäuserückseite der Handwerkzeugmaschinen 10 ist eine Tülle 16 angeordnet, die als eine Aufnahme für ein Netzkabel vorgesehen ist, wobei das Netzkabel elektrisch verbunden mit dem Elektromotor 14 ist. Das Gehäuse 12 der Handwerkzeugmaschine 10 weist an seiner äußeren Umfangsfläche zumindest eine Lufteinlassöffnung 18 auf. Die Rückseite des Gehäuses 12 der Handwerkzeugmaschine 10 weist beispielhaft zumindest eine zusätzliche Lufteinlassöffnung 19 auf. Zur Befestigung des Filterträgers 100 mit der Handwerkzeugmaschine 10 weist das Gehäuse 12 der Handwerkzeugmaschine 10 zumindest ein erstes Sicherungselement 20 und zumindest ein zweites Sicherungselement 22, insbesondere zwei zweite Sicherungselemente 22, auf. Das erstes Sicherungselement 20 ist beispielhaft an der äußeren Umfangsfläche des Gehäuses 12 der Handwerkzeugmaschine 10 angeordnet. Das erste Sicherungselement 20 der Handwerkzeugmaschine 10 ist beispielhaft als eine Rastaufnahmeöffnung ausgebildet, die vebindbar mit einem ersten Befestigungselement 120 des Filterträgers 100 ausgebildet ist. Das zweite Sicherungselement 22 der Handwerkzeugmaschine 10 bis beispielhaft an der Rückseite des Gehäuses 12 der Handwerkzeugmaschine 10 angeordnet. In der vorliegenden Ausführungsform sind zwei zweite Sicherungselemente 22 der Handwerkzeugmaschine 10 dargestellt, die mit zwei zweiten Befestigungselementen 122 des Filterträgers 100 verbindbar ausgebildet sind. Das zweite Sicherungselement 22 der Handwerkzeugmaschine 10 ist beispielhaft als eine Auslassung im Gehäuse 12 der Handwerkzeugmaschine ausgebildet. Der Filterträger 100 weist ein Filterträgerelements 102 auf, wobei das Filterträgerelement 102 zumindest eine Aufnahmeöffnung 104 umfasst, die dazu ausgebildet ist, ein Filterelement 106 aufzunehmen. Das Filterträgerelement 102 des Filterträgers 100 ist vorteilhaft aus einem formstabilen Kunststoff ausgebildet. Die Filterelemente 106 des Filterträgers 100 sind bevorzugt derart angeordnet, dass sie die Lufteinlassöffnungen 18,19, insbesondere alle Lufteinlassöffnungen 18,19, im Gehäuse 12 der Handwerkzeugmaschine 10 im Wesentlichen vollständig abdecken. Der Filterträger 100 weist zumindest ein erstes Befestigungselement 120 und zumindest ein zweites Befestigungselement 122, insbesondere zwei zweite Befestigungselement 122, auf. Das erste Befestigungselement 120 des Filterträgers 100 ist beispielhaft als ein Rastelement in Form einer Rastnase oder eines Rasthaken ausgebildet. Das erste Befestigungselement 120 des Filterträgers 100 ist vorteilhaft federnd ausgebildet. Das erste Befestigungselement 120 ist vorteilhaft einstückig mit dem Filterträgerelement 102 ausgebildet. Das zweite Befestigungselement 122 des Filterträgers 100 bis beispielhaft als ein Formschlusselement, insbesondere als ein hakenförmiges Element, ausgebildet. Das zweite Befestigungselement 122 des Filterträgers 100 ist vorteilhaft einstückig mit dem Filterträgerelement 102 ausgebildet. Das erste Befestigungselement 120 und das zweite Befestigungselement 122 des Filterträgers 100 sind beispielhaft auf gegenüberliegenden Endbereichen des Filterträgers 100 angeordnet. Unter Endbereichen des Filterträgers 100 sollen insbesondere die Seitenkanten des Filterträgers 100 verstanden werden. Der Filterträger 100 weist eine Betätigungseinheit 130 auf, die an dem ersten Befestigungselement 120 des Filterträgers 100 angeordnet ist. Der Filterträger 100 ist über eine Betätigung der Betätigungseinheit 130 lösbar mit der Handwerkzeugmaschine 10 ausgebildet. Insbesondere wird über eine Betätigung der Betätigungseinheit 130 der Formschluss oder die Rastverbindung des ersten Befestigungselements 120 des Filterträgers 100 mit dem ersten Sicherungselement 20 der Handwerkzeugmaschine 10 gelöst. Die Verbindung des Filterträgers 100 mit der Handwerkzeugmaschine 10 erfolgt zunächst über eine formschlüssige Befestigung des zweiten Befestigungselements 122 des Filterträgers 100 mit dem zweiten Sicherungselement 22 der Handwerkzeugmaschine 10. Im Anschluss daran wird durch eine Schwenkbewegung das erste Befestigungselement 120 des Filterträgers 100 lösbar mit dem ersten Sicherungselement 20 der Handwerkzeugmaschine 10 verbunden. Das erste Befestigungselement 120 des Filterträgers 100 ist vorteilhaft über eine formschlüssige Rastverbindung mit dem ersten Sicherungselement 20 des Handwerkzeugs 10 verbindbar ausgebildet. Der Filterträger 100 ist vorteilhaft eng an die Kontur des Gehäuses 12 der Handwerkzeugmaschine 10 eingepasst. Insbesondere erfolgt die Verbindung des Filterträgers 100 mit der Handwerkzeugmaschine 10 selbsttätig. Unter selbsttätig soll insbesondere verstanden werden, dass eine Betätigung es Betätigungselements 130 des Filterträgers 100 nicht zur Verbindung des Filterträgers 100 mit der Handwerkzeugmaschine 10 benötigt wird.

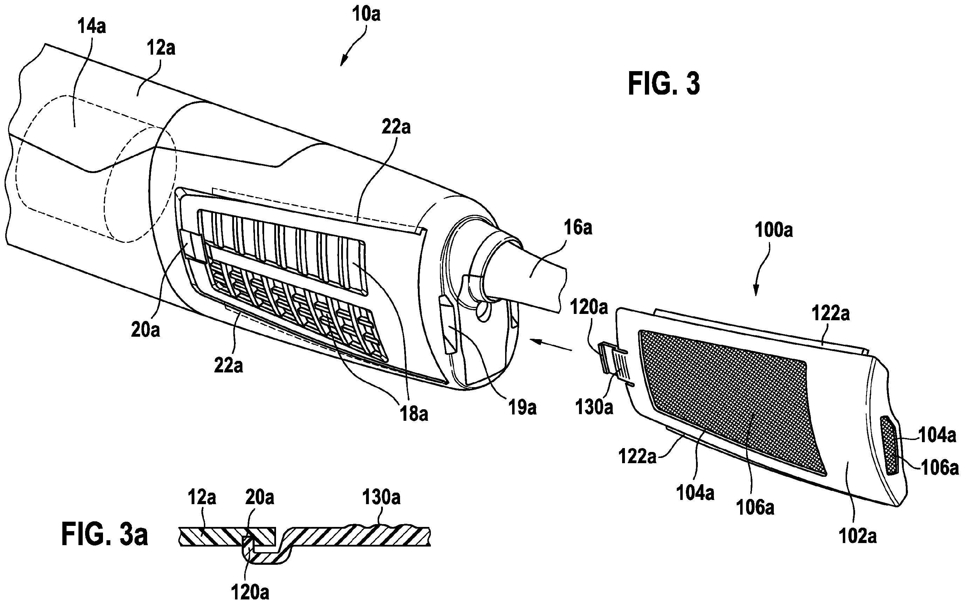

In Figur 3 ist eine perspektivische Ansicht einer alternativen Ausführungsform der erfindungsgemäßen Handwerkzeugmaschine 10a mit einem Filterträger 100a gezeigt, wobei der Filterträger 100a im Wesentlichen über eine Linearbewegung mit der Handwerkzeugmaschine 10a verbindbar ausgebildet ist. Diese Ausführungsform unterscheidet sich im Wesentlichen von der ersten Ausführungsform durch die Form des ersten und des zweiten Befestigungselements 120a,122a des Filterträgers 100a und deren korrespondierenden Sicherungselementen 20a,22a an der Handwerkzeugmaschine 10a sowie der Anordnung des zweiten Befestigungselements 122a, insbesondere der zwei zweiten Befestigungselemente 122a, des Filterträgers 100a. Das erste Sicherungselement 20a der Handwerkzeugmaschine 10a ist beispielhaft als eine Aufnahmetasche für ein Rastelement ausgebildet. Das Sicherungselement 20a der Handwerkzeugmaschine 10a ist vorteilhaft korrespondierend zu dem ersten Befestigungselement 120a des Filterträgers 100a ausgebildet. In Fig. 3a ist das Befestigungselement 120a des Filterträgers 100a lösbar verbunden mit dem Sicherungselement 20a der Handwerkzeugmaschine 10a in einem Längsschnitt gezeigt. Das erste Befestigungselement 120a kann linear entlang der Längserstreckung der Handwerkzeugmaschine 10a in das erste Sicherungselement 20a der Handwerkzeugmaschine 10a eingeschoben werden, wobei das erste Befestigungselement 120a des Filterträgers 100a mit dem ersten Sicherungselement 20a der Handwerkzeugmaschine 10a über eine Rastverbindung verbindbar ausgebildet sind. Beispielhaft greift der Rastarm 120a des Filterträgers 100a in die Rastaufnahme 20a der Handwerkzeugmaschine 10a. Durch eine Betätigung der Betätigungseinheit 130a des Filterträgers 100, wobei die Betätigungseinheit 130a einstückig mit dem Befestigungselement 120a ausgebildet ist, kann die Verbindung zwischen dem Befestigungselement 120a des Filterträgers 100a und dem Sicherungselement 20a der Handwerkzeugmaschine 10a vorteilhaft gelöst werden. Die Betätigungseinheit 130a des Filterträgers 100a weist insbesondere einen kennzeichnenden Bereich auf, insbesondere einen strukturierten oder geriffelten Oberflächenbereich, welcher dazu ausgebildet ist, dem Anwender die Position zu signalisieren, an der die Betätigung zu erfolgen hat. Die Betätigung erfolgt insbesondere durch eine radiale Kraft auf die Betätigungseinheit 130a des Filterträgers 100a in Richtung der Handwerkzeugmaschine 10a. Dies hat insbesondere zur Folge, dass die Rastverbindung zwischen dem Rastarm 120a des Filterträgers 100a und der Rastaufnahme 20a der Handwerkzeugmaschine 10a gelöst wird und der Filterträger 100a von der Handwerkzeugmaschine 10a entfernbar ist. Das zweite Sicherungselement 22a der Handwerkzeugmaschine 10a, insbesondere die zwei zweiten Sicherungselemente 22a, sind beispielhaft als Nut oder eine Vertiefung ausgebildet. Das zweite Sicherungselemente 22a der Handwerkzeugmaschine 10a ist dazu vorgesehen, das zweite Befestigungselement 122a des Filterträgers 100 in Form einer Führungsschiene lösbar aufzunehmen, beziehungsweise sich mit dem zweiten Befestigungselement 122a lösbar zu verbinden. Die Führungsschiene kann beispielhaft mit einem Schwalbenschwanz- oder einem T-Nut Profil ausgebildet sein. Das zweite Befestigungselement 122a kann beispielhaft durchgehend, partiell oder segmentiert ausgebildet sein. Das zweite Befestigungselement 122a des Filterträgers 100a ist insbesondere zur radialen Befestigung des Filterträgers an der Handwerkzeugmaschine ausgebildet sein. Das zweite Befestigungselement 122a des Filterträgers 100a ist vorteilhaft an den Endbereichen oder Seitenkanten des Filterträgers 100a angeordnet, die parallel zu der Linearbewegung, die beim Aufbringen des Filterträgers 100a an die Handwerkzeugmaschine 10a erfolgt, verlaufen. Das erste Befestigungselement 120a des Filterträgers 100a ist vorteilhaft an einem Endbereich angeordnet, insbesondere einer Seitenkante, des Filterträgers 100a, wobei der Endbereich des ersten Befestigungselements 120a im Wesentlich orthogonal zu dem Endbereich verläuft, an dem das zweite Befestigungselement 122a des Filterträgers 100a angeordnet ist.

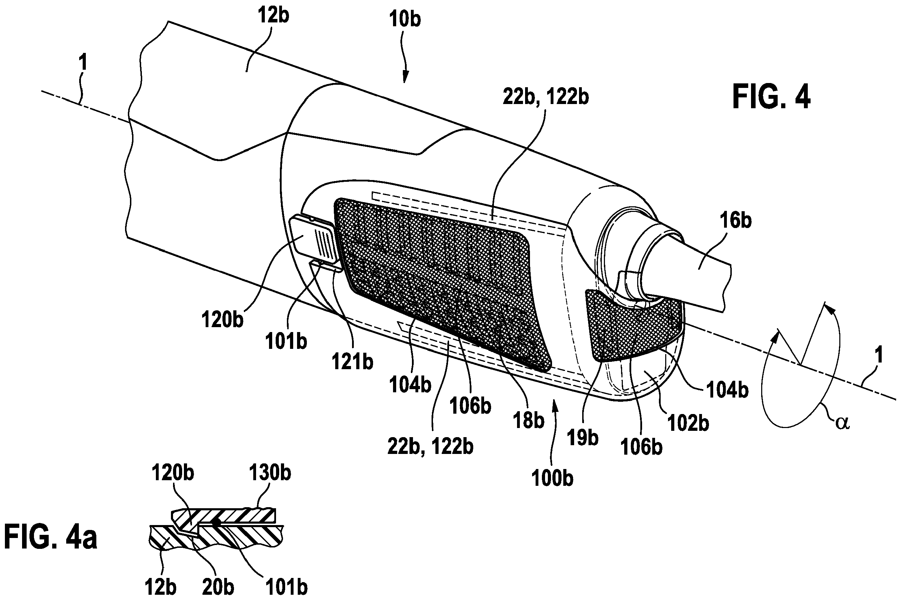

In Fig. 4 ist eine alternative Ausführungsform der Handwerkzeugmaschine 10b mit einem Filterträger 100b gezeigt. Der Filterträger 100b ist lösbar befestigbar mit dem Gehäuse 12b der Handwerkzeugmaschine 10b ausgebildet. Der Filterträger 100b ist beispielhaft als ein im Wesentlichen schalenförmiger und/oder konturangepasster Aufsatz ausgebildet. Insbesondere kann der Filterträger 100b auch U-förmig ausgebildet sein. Der Filterträger 100b umgreift die äußere Umfangsfläche des Gehäuses 12b der Handwerkzeugmaschine 10b zumindest teilweise, beispielhaft einen Winkelbereich α von 180° bis 360°, insbesondere 260° bis 290°, ganz insbesondere 270°, um die Längserstreckung des Handwerkzeugs 10b, insbesondere um die Längserstreckung der Gehäuseachse 1 des Handwerkzeugs 10b. Der Winkelbereich α ist in Fig. 4 schematisch eingezeichnet. Vorteilhaft kann der Filterträger 100b auch eine im Wesentlichen vollständig geschlossen Form aufweisen, mit anderen Worten, ein Winkelbereich α von 360° um die Längserstreckung des Handwerkzeugs 10b kann von dem Filterträger umgeben sein. Zusätzlich ist der Filterträgeraufsatz 100b zumindest teilweise an der Rückseite der Handwerkzeugmaschine 10b angeordnet. Der Filterträger 100b ist im Wesentlich dazu ausgebildet, die Lufteingangsöffnungen 18b,19b der Handwerkzeugmaschinen mit den Filterelementen 106b, die in Aufnahmeöffnungen 104b aufgenommen sind, zu bedecken und somit vor einem Eintritt von Staub-, Werkstoff- und magnetisierbaren Partikeln zu schützen. Zur lösbaren Verbindung des Filterträgeraufsatzes 100b mit der Handwerkzeugmaschine 10b, weist der Filterträger 100b, zumindest ein erstes Befestigungselement 120b und zumindest ein zweites Befestigungselement 122b auf. Der Filterträger 100b ist in axialer Richtung auf die Handwerkzeugmaschine 10b aufbringbar, insbesondere aufgeschoben. Das Aufbringen des Filterträgers 100b wird über insbesondere zwei zweite Befestigungselemente 122b, insbesondere Führungselemente oder Führungsschienen, geführt. Die Handwerkzeugmaschine 10b weist korrespondierende zweite Sicherungselemente 22b, in die die zweiten Befestigungselemente 122b des Filterträgers 100b eingreifen. Das zweite Befestigungselement 122b des Filterträgers 100b ist beispielhaft an der radial innen liegenden Seitenfläche des Filterträgers 100 angeordnet, wobei die Seitenfläche des Filterträgers 100 die Handwerkzeugmaschine 10b beaufschlagt. Beispielhaft sind die zweiten Befestigungselemente 122b des Filterträgers 100b in der Umgebung, insbesondere in der unmittelbaren Umgebung, eines Endbereichs des Filterträgers 100b oder benachbart zu dem Endbereich, insbesondere unmittelbar benachbart, angeordnet. Am stirnseitigen Endbereich des Filterträgers 100b ist das erste Befestigungselement 120b des Filterträgers 100b in einer Auslassung 121b der Filterträgerelements 102b angeordnet. Insbesondere ist das erste Befestigungselement 120b derart angeordnet, dass der Filterträger 100b im befestigten Zustand des Filterträgers 100b an der Handwerkzeugmaschine 10b in das erste Sicherungselement 20b der Handwerkzeugmaschine 10b einrastet. In der Auslassung 121b des Filterträgerelements 102b ist eine Drehachse 101b in Form eines Querstegs angeordnet, der beispielhaft einstückig mit dem Filterträgerelement 102b ausgebildet ist. In Fig. 4a ist ein Schnitt einer Seitenansicht des ersten Befestigungselements 120b des Filterträgers und des ersten Sicherungselements 20b der Handwerkzeugmaschine 10b gezeigt. Das erste Befestigungselement 120b des Filterträgers 100b, beispielhaft als ein Rastelement ausgeführt und ist mit dem Quersteg 101b verbunden. Der Quersteg 101b beaufschlagt die äußere Umfangsfläche des Gehäuses 12b der Handwerkzeugmaschine 10b. Das erste Befestigungselement 120b des Filterträgers 100b ist über eine Rastverbindung mit dem ersten Sicherungselement 20b der Handwerkzeugmaschine 10b, beispielhaft ausgebildet als eine Rastaufnahme, lösbar verbindbar ausgebildet. Die Drehachse 101b des Filterträgerelements 102b, ist beispielhaft räumlich zwischen der Rastnase des ersten Befestigungselements 120b und der Betätigungseinheit 130b des Filterträgers 100b angeordnet. Die Betätigungseinheit 130b des Filterträgers 100b ist beispielhaft einstückig mit dem ersten Befestigungselement 120b des Filterträgers 100b ausgebildet. Aufgrund des Querstegs 101b ist die Betätigungseinheit 130b des Filterträgers 100b von dem Gehäuse 12b der Handwerkzeugmaschine 10b beabstandet angeordnet. Durch die Anordnung des Querstegs 101b des Filterträgerelements 102b wirkt eine radiale Kraft in Richtung des Gehäuses 12b der Handwerkzeugmaschine 10b auf die Betätigungseinheit 130b des Filterträgers 100b wie ein Hebel auf das erste Befestigungselement 120b des Filterträgers 100b, wodurch dieser aus seiner Rastverbindung lösbar ist.

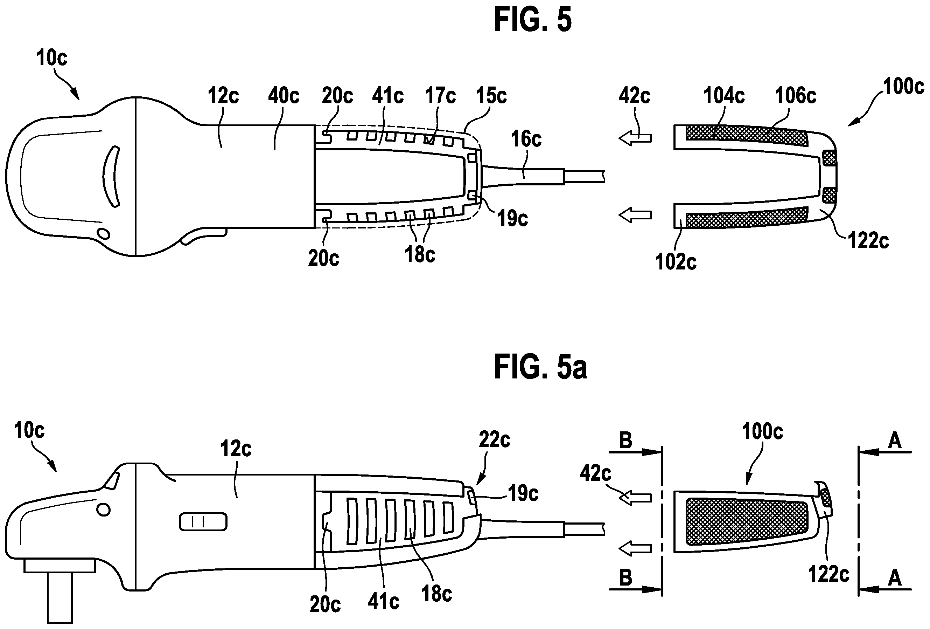

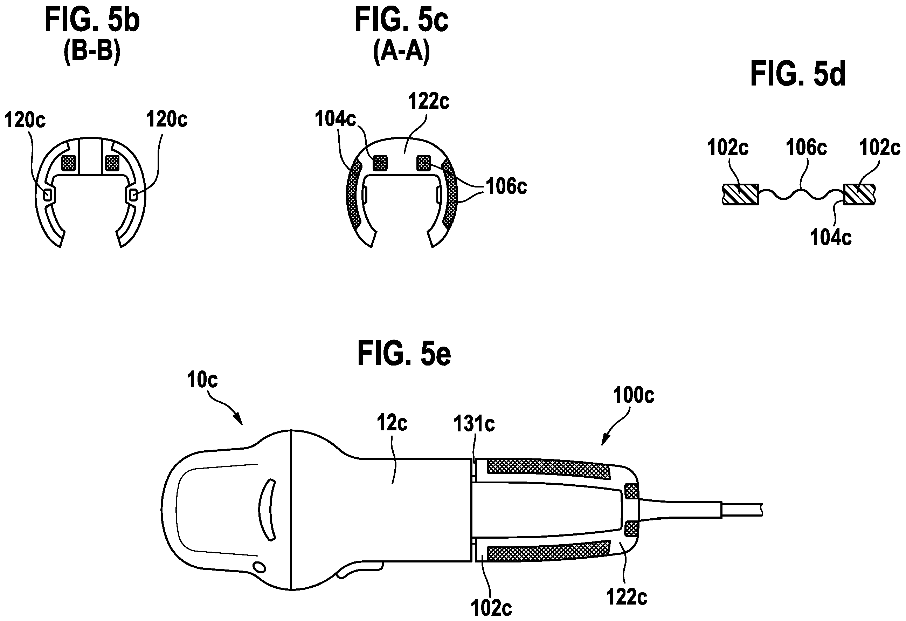

In Fig. 5 ist eine Draufsicht auf eine alternative Ausführungsform einer Handwerkzeugmaschine 10c mit einem Filterträger 100c gezeigt, die dazugehörende Seitenansicht ist in Fig. 5a zu sehen. In Fig. 5b ist die Vorderseite des Filterträgers 100c zu sehen, in Fig. 5c ist die Rückseite des Filterträgers 100c gezeigt. Der Filterträger 100c ist lösbar befestigbar mit einer Handwerkzeugmaschine 10c ausgebildet. Das Gehäuse 12c der Handwerkzeugmaschine 10c kann zumindest ein Motorgehäuse 40c und ein Gehäusedeckel 41c aufweisen. Der Gehäusedeckel 41c der Handwerkzeugmaschine 10c umfasst dabei die Rückseite der Handwerkzeugmaschine 10c, an welcher die Tülle 16c angeordnet ist. Der Gehäusedeckel 41c weist an seiner äußeren Umfangsfläche zumindest eine Lufteingangsöffnung 18c und an seiner Rückseite zumindest eine Lufteingangsöffnung 19c auf. Der Gehäusedeckel 41c kann in der axialen Längserstreckung der Handwerkzeugmaschine 10c, insbesondere innerhalb einer Gesamtaussenkontur 15c liegende, erste Sicherungselemente 20c aufweisen, beispielsweise Zapfen. Das erste Sicherungselement 20c der Handwerkzeugmaschine 10c ist insbesondere von einem ersten Befestigungselement 120c des Filterträgers 100c umgreifbar ausgebildet. Der Gehäusedeckel 41c der Handwerkzeugmaschine 100c weist im Bereich der Lufteinlassöffnungen 18c eine gegenüber der durchgängigen Gehäuseaußenkontur 15c zurückgesetzten Außenfläche 17c auf. Der Filterträger 100c wird in der Aufbringrichtung 42c axial an der Handwerkzeugmaschine 10c befestigt. Der Filterträger 100c ist über zumindest ein erstes Befestigungselement 120c, insbesondere zwei erste Befestigungselemente 120c, und zumindest ein zweites Befestigungselement 122c mit der Handwerkzeugmaschine 10c befestigbar ausgebildet. Die zwei ersten Befestigungselemente 120c des Filterträgers 100c sind beispielhaft als Lochlaschen ausgebildet (siehe Fig. 5b). Das zweite Sicherungselement 22c der Handwerkzeugmaschine 10c ist als ein elastisches Befestigungselement, insbesondere einer elastischen Rückwand der Handwerkzeugmaschine 10c, ausgebildet (siehe Fig. 5c). Das elastische zweite Befestigungselement 122c des Filterträgers 100c ist insbesondere zur Vorspannung des Filterträgers 100c vorgesehen. Das zweite Befestigungselement 122c wird insbesondere gegen ein zweites Sicherungselement 20c der Handwerkzeugmaschine 10c, ausgebildet als Rückwand der Handwerkzeugmaschine 10c, vorgespannt. Beim Aufbringen des Filterträgers 100c entlang der Aufbringrichtung 42c an die Handwerkzeugmaschine 10c ist der Filterträger 100c über das elastische Befestigungselement 122c entgegengesetzt zur Aufbringrichtung vorspannbar ausgebildet. Im befestigten Zustand wird der Filterträger 100c durch die Vorspannung in seiner Position gehalten. Durch die Vorspannung ist der Filterträger 100c im Wesentlichen spielfrei an der Handwerkzeugmaschine 10c lösbar befestigbar ausgebildet. Insbesondere kann auch das Filterelement 106c des Filterträgers 100c elastisch ausgebildet sein (dargestellt in Fig. 5d). Beispielhaft kann das Filterelement 106c des Filterträgers 100c gewellt ausgebildet sein, sodass eine Dehnung beziehungsweise eine Verformung des Filterelements ermöglicht wird.
In Fig. 5e ist der Filterträger 100c im befestigten Zustand mit der Handwerkzeugmaschine 10c gezeigt. Insbesondere fügt sich der Filterträger 100c bündig in die Gehäuseaußenkontur 15c des Gehäusedeckels 41c ein. Im befestigten Zustand weist das System aus Handwerkzeugmaschine 10c und Filterträger 100c einen Spalt 131c zwischen dem Filterträgerelement 102c des Filterträgers 100c und dem Gehäuse 12c der Handwerkzeugmaschine 10c auf. Der Spalt 131c erleichtert einem Anwender das Lösen der Verbindung des Filterträgers 100c mit der Handwerkzeugmaschine 10c, wobei das Lösen der Verbindung über ein Vorschieben, Aufweiten und Abziehen des Filterträgers 100c von der Handwerkzeugmaschine 10c erfolgt.

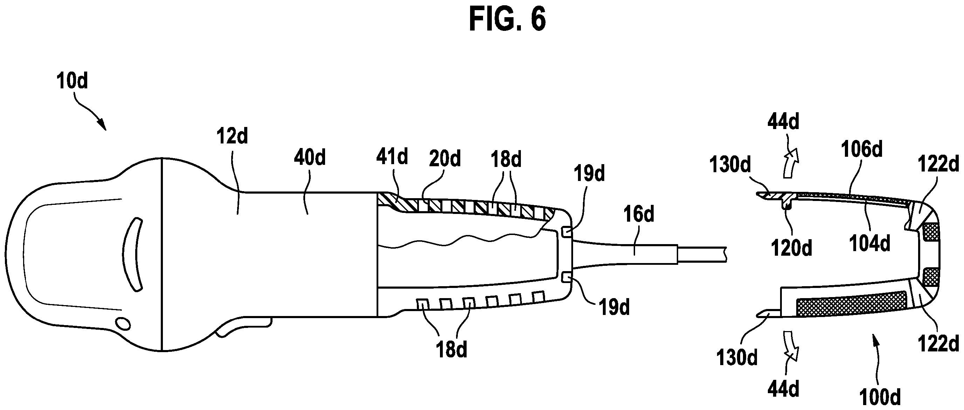

In Fig. 6 ist eine Draufsicht auf eine alternative Ausführungsform einer Handwerkzeugmaschine 10d mit einem Filterträger 100d gezeigt. Diese Ausführungsform unterscheidet sich von der vorherigen im Wesentlichen durch die Befestigungselemente 120d,122d des Filterträgers und dem ersten Sicherungselement 20d des Handwerkzeugs 10d. Als erstes Sicherungselement 20d des Handwerkzeugs 10d ist beispielhaft eine Seitenwand der Lufteinlassöffnung 18d ausgebildet. Das erste Befestigungselement 120d des Filterträgers 100d ist beispielhaft als ein sich radial in Richtung des Handwerkzeug 10d erstreckendes hakenförmiges Element ausgebildet. Das zweite Befestigungselement 122d ist insbesondere als ein in Aufbringrichtung des Filterträgers 100d auf die Handwerkzeugmaschine 10d elastisches Element ausgebildet. Durch das zweite elastische Befestigungselement 122d wird der Filterträger 100d beim Aufbringen an die Handwerkzeugmaschine 100d vorgespannt. Das erste Befestigungselement 120d des Filterträgers 100d greift in eine Lufteinlassöffnung 18d des Handwerkzeugs 10d ein und beaufschlagt das erste Sicherungselement 20d des Handwerkzeugs 10d, insbesondere eine Seitenwand des Handwerkzeugs 10. Das erste Befestigungselement 120d des Filterträgers 100d wird in seiner Position in der Lufteingangsöffnung 18d der Handwerkzeugmaschine 10d durch die Vorspannung aufgrund des zweiten Befestigungselements 122d des Filterträgers 100d gehalten oder gelagert. Zum Lösen der Befestigung des Filterträgers 100d mit der Handwerkzeugmaschine 10d weist der Filterträger 100d eine Betätigungseinheit 130d in Form einer Haltegeometrie oder Halteelements auf. Die Betätigungseinheit 130d kann vorteilhaft im Bereich des ersten Befestigungselements 120d des Filterträgers 100d angeordnet sein. Die Betätigungseinheit 130d ist vorteilhaft einstückig mit dem Filterträger 100d ausgebildet. Der Filterträger 100d ist durch eine Betätigung der Betätigungseinheit 130d des Filterträgers 100d mit einer radial zur Längserstreckung des Handwerkzeugs 10d gerichteten Bewegung 44d, abziehbar ausgebildet.

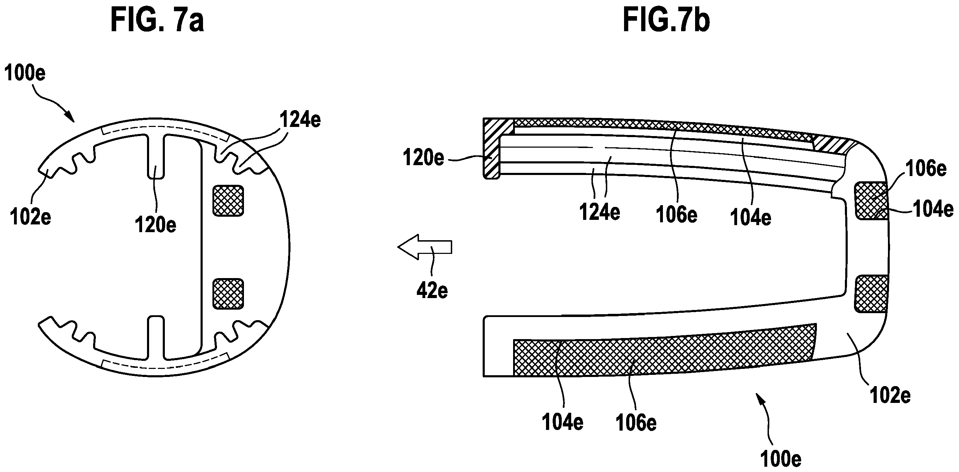

In Fig. 7a ist eine Rückseite einer alternativen Ausführungsform eines Filterträgers 100e und in Fig. 7b eine Seitenansicht des Filterträgers 100e gezeigt. Der Filterträger 100e ist insbesondere mit einer Handwerkzeugmaschine 100d wie zuvor beschrieben lösbar befestigbar ausgebildet. Das Filterträgerelement 102e kann beispielhaft aus einem hart-elastischen Material, insbesondere TPE, ausgebildet sein. Das Filterträgerelement 102e weist eine bestimmte Geometrie, insbesondere Längsrippen 124e auf, durch die der Filterträger 100e ausreichend biegestabil ausgebildet ist, um mit der Gehäuseaußenkontur der Handwerkzeugs 100d eine stabile Einheit zu bilden. Des Weiteren ist der Filterträger in Richtung der Aufbringrichtung 42 elastisch verformbar ausgebildet, um eine Vorspannung zu erzeugen. Das erste Befestigungselement 120e des Filterträgers 100e ist beispielhaft als ein hakenförmiges Element ausgebildet. Die Aufnahmeöffnungen 104e des Filterträger mit den Filterelement 106e sind fest im formgebenden Verfahren, beispielsweise Spritzguss, hergestellt und insbesondere kleiner als die Lufteingangsöffnungen 18d der Handwerkzeugmaschine 10d ausgebildet, um eine Filterwirkung zu erzielen.

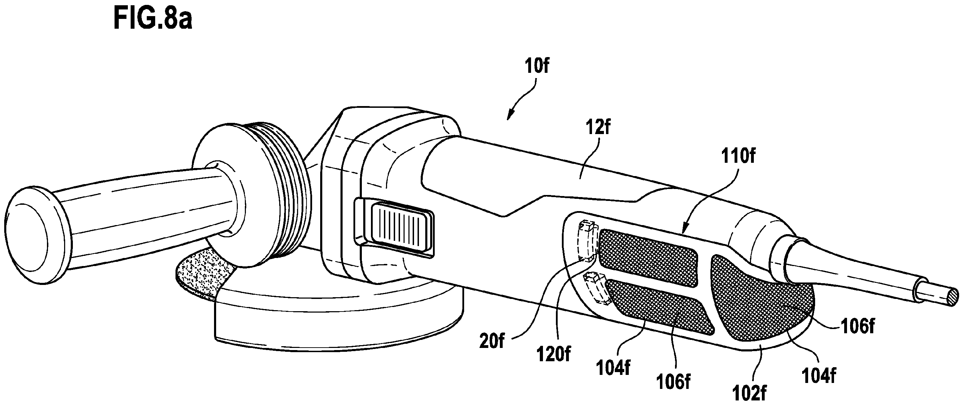

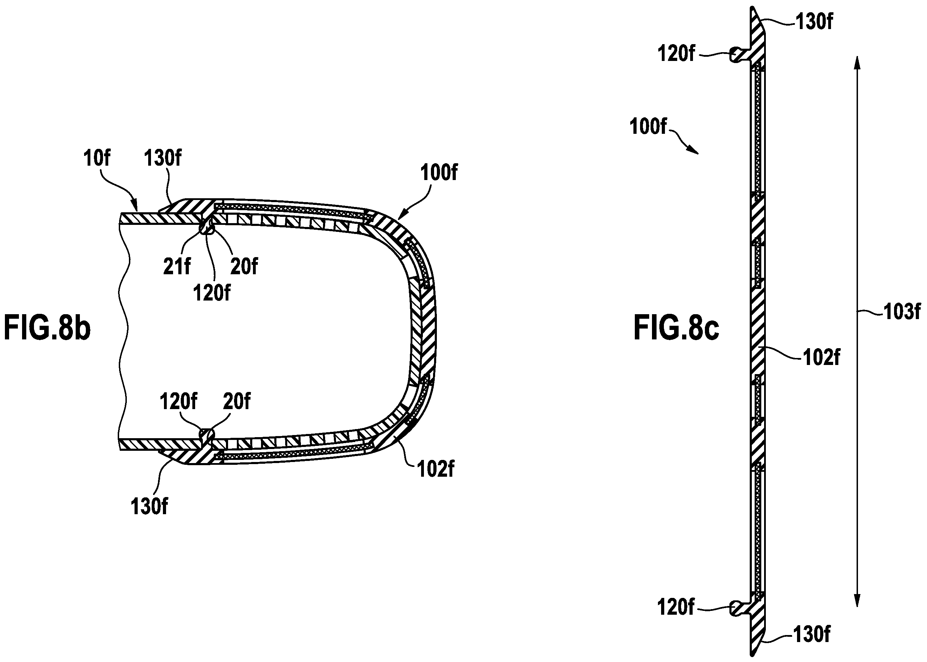

In Fig. 8a ist eine perspektivische Ansicht einer alternativen Ausführungsform eines Filterträgers 100f gezeigt, der lösbar befestigbar an eine Handwerkzeugmaschine 10f ist. In Fig. 8b ist ein Querschnitt des Filterträgers 100f gezeigt. Der Filterträger 100f ist beispielhaft U-förmig ausgebildet. Der Filterträger 100f kann vorteilhaft zweistückig, aus einem Filterträgerelement 102f und zumindest einem Filterelement 106f ausgebildet sein. Das Filterträgerelement 102f kann beispielhaft aus Gummi, TPE, Silikon oder einem anderen weichen und/oder elastischen Kunststoff ausgebildet sein. Vorteilhaft kann der Filterträger 100f die Handwerkzeugmaschine 10f an der Rückseite der Handwerkzeugmaschine 10f umgreifen. Der Filterträger 100f kann vorteilhaft aus einem weich elastischen Material ausgebildet sein. Insbesondere ist der Filterträger 100f derart elastisch verformbar ausgebildet, dass er im unbefestigten Zustand eine im Wesentlichen beliebige Form einnehmen kann. Beispielhaft weist der Filterträger 100f im unbefestigten Zustand eine im Wesentlichen lineare Form auf (dargestellt in Fig. 8c). Der Filterträger 100f weist zumindest eine Aufnahmeöffnung 104f auf, in welcher zumindest ein Filterelement 106f aufgenommen ist. Die Aufnahmeöffnungen 104f des Filterträgers 100f sind vorteilhaft im Bereich der Lufteingangsöffnungen im Gehäuse 12f der Handwerkzeugmaschine 10f angeordnet. Zur Befestigung des Filterträgers 100f an der Handwerkzeugmaschine 10f weist der Filterträger 100f zumindest ein erstes Befestigungselement 120f, insbesondere zwei erste Befestigungselement 120f, auf. Das erste Befestigungselement 120f des Filterträgers 20f ist beispielhaft als ein Formschlusselement, insbesondere ein Rastelement ausgebildet, welches dazu ausgebildet ist, in zumindest ein erstes Sicherungselement 20f der Handwerkzeugmaschine 10f, insbesondere ein Durchbruch, eine Vertiefung oder dergleichen zu den Befestigungselement korrespondierende Sicherungselement 20f, einzugreifen und somit eine Befestigung des Filterträgers 100f an der Handwerkzeugmaschine 10f zu realisieren. Das erste Befestigungselement 120f des Filterträgers 20f kann aus einem weich-elastischen Material und/oder einstückig mit dem Filterträger 100f ausgebildet sein. Das erste Befestigungselement 120f ist derart elastisch verformbar ausgebildet, dass es beim Aufbringen an die Handwerkzeugmaschine 10f seine Form verändert. Beispielhaft ist das erste Befestigungselement 120f des Filterträgers 100f als ein Formschlusselement in T-Form ausgebildet und das erste Sicherungselement 20f der Handwerkzeugmaschine 10f als eine Nut mit T-Profil ausgebildet. Beim Aufbringen des Filterträgers 100f an die Handwerkzeugmaschine 10f wird das erste Befestigungselement 120f des Filterträgers 100f derart zusammengestaucht, dass es durch den Spalt 21f beweglich ist, und anschließend beim Formschluss wieder die T-Form einnehmen kann. Vorteilhaft ist das erste Befestigungselement 120f an zwei gegenüberliegenden Endbereichen des Filterträgerelements 102f des Filterträgers 100f angeordnet. Insbesondere ist der Filterträger entlang seiner Längserstreckung 103f um einen Wert von 15%, vorteilhaft um 25% und weiter vorteilhaft um 50% bezogen auf seine Länge im ungespannte Zustand elastisch verformbar ausgebildet. Das Filterträgerelement 102f ist insbesondere dazu ausgebildet die Kräfte aufzunehmen, die bei der Spannung oder Dehnung des Filterträgers 100f entlang seiner Längserstreckung 103f entstehen. Das Filterträgerelement 102f weist beispielhaft eine Shore A Härte von 30 bis 75, insbesondere von 40 bis 65 und vorteilhaft von 55 auf. Des Weiteren kann das Filterträgerelement 102f eine Reißfestigkeit von 0,5 bis 4,5, vorteilhaft von 1,5 bis 3,5 und weiter vorteilhaft von 2,2 (angegeben in MPa) auf.

Im befestigen Zustand ist der Filterträger 100f leicht gespannt, insbesondere ist seine Längserstreckung 103f um zumindest 5% länger als im ungespannte Zustand. Die Befestigung des Filterträgers 100f an der Handwerkzeugmaschine 10f erfolgt zunächst über die ersten Befestigungselemente 120f an einem Endbereich des Filterträgers 100f, wobei der Filterträger 100f im Wesentlichen in einem ungespannten Zustand ist. Zur zusätzlichen Befestigung der ersten Befestigungselemente 120f am gegenüberliegenden Endbereich des Filterträgers 100f muss der Filterträger 100f vorteilhaft in Richtung seiner Längserstreckung 103f vorgespannt werden. Vorteilhaft ist der gespannte Filterträger 100f im Wesentlich spielfrei an der Handwerkzeugmaschine 10f befestigbar ausgebildet. Unter im Wesentlichen spielfrei soll insbesondere verstanden werden, dass zwischen dem Filterträger 100f und der Handwerkzeugmaschine 10f ein geringfügiger Spalt, insbesondere kein Spalt, ausgebildet ist. Alternativ kann der Filterträger 100f in einer Nut/Federführung zusätzlich aufgenommen werden, wobei die Nut/Federführung im Wesentlichen ein Labyrinth für die Luft darstellt und damit eine bessere Dichtwirkung erzeugt. Des Weiteren kann der Filterträger 100f ein zweites Befestigungselement oder die Handwerkzeugmaschine 10f ein zweites Sicherungsmittel wie beispielsweise ein Vertiefung zum Einlegen oder Rippen am Gehäuse 12f der Handwerkzeugmaschine 10f zum Führen aufweisen, die die Positionierung, Fixierung und Dichtung des Filterträgers 100f an der Handwerkzeugmaschine 10f unterstützen. Vorteilhaft weist der Filterträger 100f zumindest eine Betätigungseinheit 130f auf, wobei eine Zugkraft an der Betätigungseinheit 130f das Lösen des Filterträgers 100f von der Handwerkzeugmaschine 10f erleichtert.

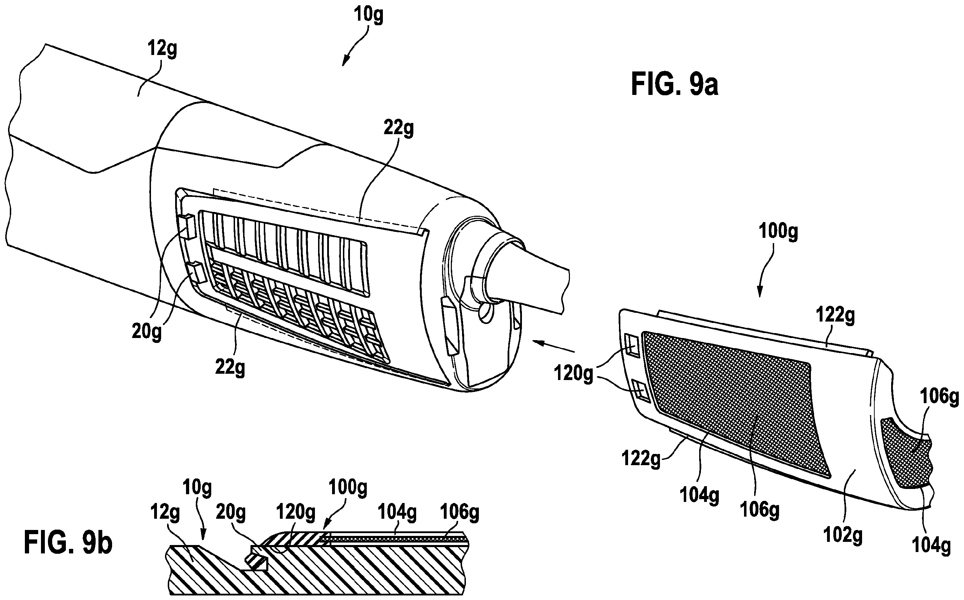

In Fig. 9a ist ein Ausschnitt einer perspektivischen Ansicht und ein Längsschnitt einer alternativen Ausführung eines Filterträgers 100g mit einer Handwerkzeugmaschine 10g gezeigt. Der Filterträger 100g ist wie in der vorherigen Ausführungsform aus einem weich-elastischen Material und mit einem Handwerkzeug 10g lösbar befestigbar ausgebildet. Die wesentlichen Unterschiede zu der vorherigen Ausführungsform des Filterträgers 100g und der Handwerkzeugmaschine 10g liegen in der Befestigung. Das erste Befestigungselement 120g des Filterträgers 100g ist beispielhaft als eine flexible Aufnahmeöffnung, insbesondere ein Spannöffnung ausgebildet. Die Spannöffnung ist beispielhaft an einem ersten Befestigungselement 20g der Handwerkzeugmaschine 10g befestigbar ausgebildet. Der Filterträger 100g weist insbesondere vier erste Befestigungselemente 120f auf, wobei jeweils zwei auf gegenüberliegenden Endbereichen des Filterträgers 100f angeordnet sind. Des Weiteren weist die Handwerkzeugmaschine 10g zumindest ein zweites Sicherungselement 22g in Form einer Führung, beispielhaft eine axiale Nut, auf. Die Führung ist dazu ausgebildet, ein zweites Befestigungselement 122g des Filterträgers aufzunehmen, insbesondere eine Gummikappe im Gehäusedeckel. Die Gummikappe kann insbesondere über die Spannnase auf die Handwerkzeugmaschine 10g gespannt werden.

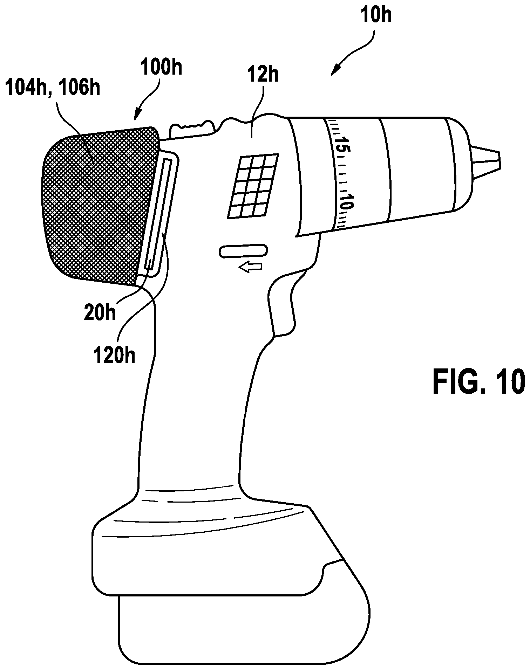

In Fig. 10 ist eine perspektivische Ansicht einer alternativen Ausführungsform eines Filterträgers 100h lösbar befestigbar an einer Handwerkzeugmaschine 10h. Die Handwerkzeugmaschine 10h ist beispielhaft als ein Bohrhammer ausgebildet. Der Filterträger 100h weist ein erstes Befestigungselement 120f auf, insbesondere ein Formschlusselement, vorteilhaft einen Bügel, welches dazu ausgebildet ist den Filterträger 100h an ein erstes Sicherungselement 20h, insbesondere ein Formschlusselement, vorteilhaft eine Erhebung, der Handwerkzeugmaschine 10h lösbar zu befestigen. Der Filterträger 100h ist beispielhaft im Wesentlichen wie eine Kappe ausgebildet und umgreift die Handwerkzeugmaschine 10h eng anliegend, insbesondere im Wesentlichen spielfrei. Alternativ kann der Filterträger 100h zur Befestigung an größere Handwerkzeugmaschinen mehr als 2, insbesondere 4, Befestigungselement 120h aufweisen.

Weitere beispielhafte Ausführungsformen der vorliegenden Lehren beinhalten die Folgenden, sind jedoch nicht darauf beschränkt:
1) In einer Ausführungsform kann die Handwerkzeugmaschine mit einem Gehäuse und mit einem Filterträger ausgebildet sein, wobei der Filterträger ein Filterträgerelement umfasst, welches zumindest eine Aufnahmeöffnung aufweist, die dazu ausgebildet ist ein Filterelement aufzunehmen und der Filterträger zumindest ein erstes Befestigungselement zur lösbaren formschlüssigen und/oder kraftschlüssigen Befestigung des Filterträgers an die Handwerkzeugmaschine aufweist, wobei das Filterträgerelement aus einem weich elastischen Material ausgebildet ist und das Filterträgerelement derart verformbar ist, dass die Länge der Längserstreckung des Filterträgers im befestigen Zustand bezogen auf die Länge der Längserstreckung im unbefestigten Zustand zumindest verlängert ist.
2) In einer Weiterbildung der Ausführungsform nach 1) kann der Filterträger entlang seiner Längserstreckung 103f um einen Wert von 15%, vorteilhaft um 25% und weiter vorteilhaft um 50% bezogen auf seine Länge im ungespannten Zustand elastisch verformbar ausgebildet sein.
3) In einer Weiterbildung der Ausführungsform nach 1) oder 2) kann das erste Befestigungselement des Filterträgers als ein Rastelement oder eine Formschlusselement, insbesondere ein Bügel oder eine Spannöffnung, ausgebildet sein.
4) In einer Weiterbildung der Ausführungsform nach 1) bis 3) kann der Filterträger ein zweites Befestigungselement, insbesondere ein Führungselement, aufweisen.
5) In einer Weiterbildung der Ausführungsform nach 1) bis 4) kann der Filterträger im Wesentlichen U-förmig oder wie eine Kappe ausgebildet sein.

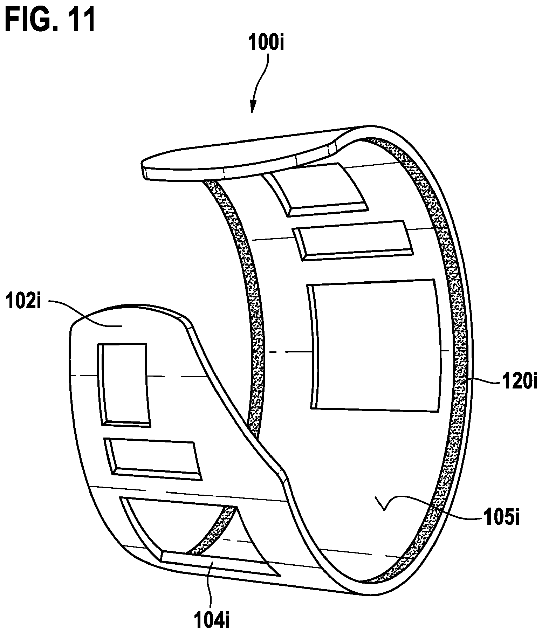

In Fig. 11 ist eine perspektivische Ansicht einer alternativen Ausführungsform eines Filterträgers 100i gezeigt, der lösbar befestigbar an eine Handwerkzeugmaschine wie zuvor beschrieben ausgebildet ist. Der Filterträger 100i weist ein Filterträgerelement 102i auf, welches beispielhaft aus einem hart-elastischen Material ausgebildet sein kann. Der Filterträger 100i ist vorteilhaft dazu ausgebildet, eine Handwerkzeugmaschine zumindest teilweise, insbesondere teilweise, an der äußeren Umfangsfläche des Gehäuses der Handwerkzeugmaschine zu umgreifen. Der Filterträger 100i weist zumindest eine Aufnahmeöffnung 104i auf, die dazu ausgebildet ist, ein Filterelement (nicht dargestellt) aufzunehmen. Des Weiteren weist der Filterträger 100i vorteilhaft an einer die Handwerkzeugmaschine beaufschlagenden Seitenfläche 105i, insbesondere die innere Seitenfläche 105i, zumindest ein erstes Befestigungselement 120i auf, das dazu ausgebildet ist, den Filterträger 100i an zumindest ein erstes Sicherungselement der Handwerkzeugmaschine lösbar zu befestigen. Beispielhaft ist das erste Befestigungselement 120i des Filterträgers 100i als ein Element einer Klettverbindung, insbesondere ein hakenförmiges Element oder ein Schlaufenelement, ausgebildet. Das erste Sicherungselement der Handwerkzeugmaschine ist vorteilhaft als das korrespondierende Element ausgebildet, sodass eine zugfeste und im Wesentlichen staub- und/oder luftdichte Befestigung des Filterträgers 100i mit einer Handwerkzeugmaschine realisierbar ist. Das erste Befestigungselement 120i des Filterträgers 100i ist vorteilhaft entlang des Randbereichs an der inneren Seitenfläche 105i des Filterträgers angeordnet. Das erste Befestigungselement 120i kann durch Aufkleben oder anderweitig mit dem Filterträger 100i verbunden werden. Das erste Befestigungselement 120i des Filterträgers 100i kann aus dem Filterelement gebildet sein.
1) In einer Ausführungsform kann die Handwerkzeugmaschine mit einem Gehäuse und einem Filterträger ausgebildet sein, wobei der Filterträger zumindest ein Filterträgerelement umfasst, welches zumindest eine Aufnahmeöffnung aufweist, die dazu ausgebildet ist ein Filterelement aufzunehmen und der Filterträger zumindest ein erstes Befestigungselement zur lösbaren formschlüssigen und/oder kraftschlüssigen Befestigung des Filterträgers an die Handwerkzeugmaschine aufweist, wobei das erste Befestigungselement des Filterträgers als ein Element einer Klettverbindung ausgebildet ist und das Filterträgerelement aus einem hart-elastischen Kunststoffmaterial vorgesehen ist, welches die äußere Umfangsfläche des Gehäuses der Handwerkzeugmaschine zumindest teilweise umgreift.

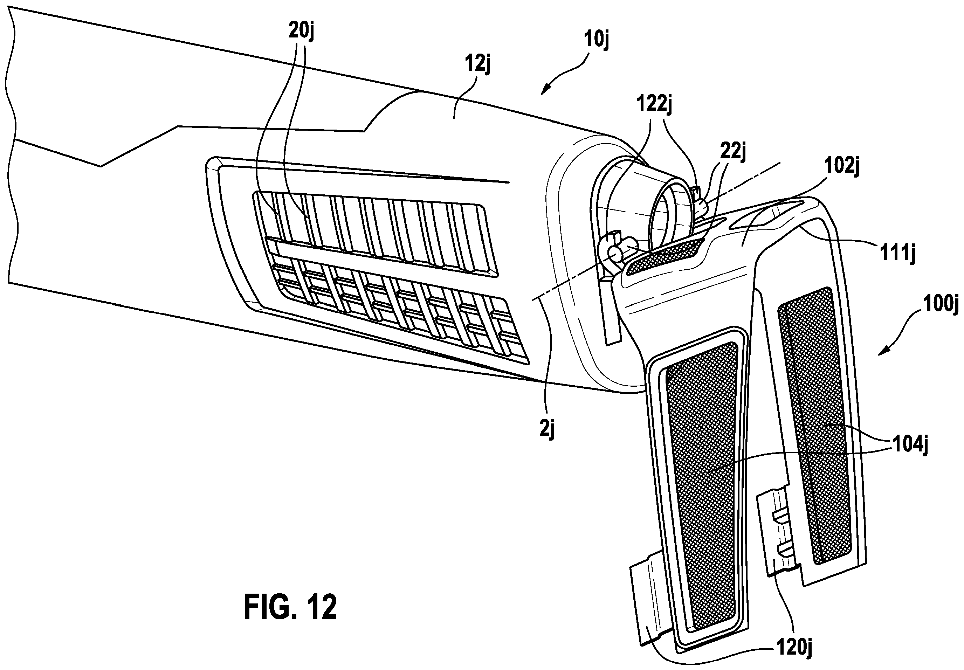

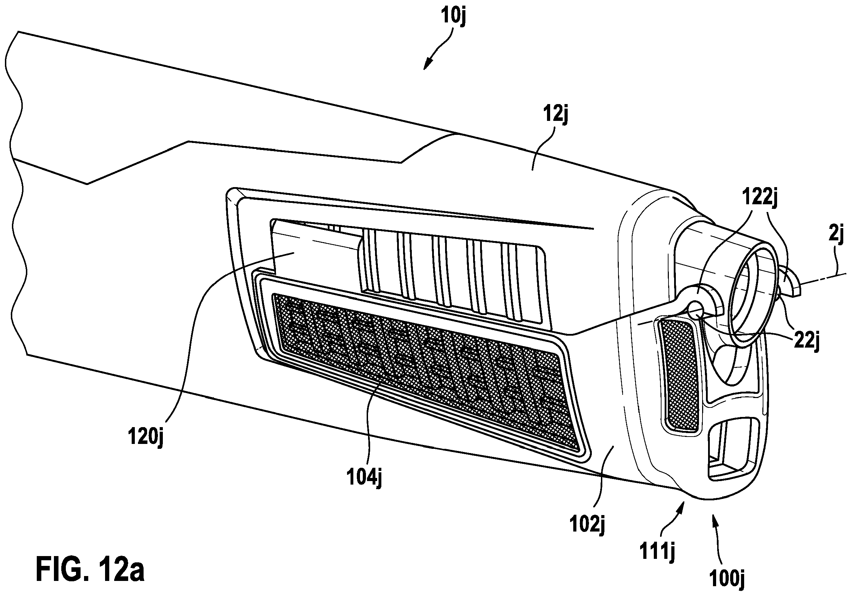

In Fig. 12 ist eine perspektivische Ansicht einer alternativen Ausführungsform eines Filterträgers 100j im eingehängte Zustand, in Fig. 12a im an der Handwerkzeugmaschine 10j befestigen Zustand, gezeigt. Das Filterträgerelement 102j des Filterträgers 100j ist aus einem formstabilen Kunststoff und ist konturnah zum Gehäuse 12j der Handwerkzeugmaschine 10j ausgebildet. Das Filterträgerelement 102j des Filterträgers 100j ist U-förmig ausgebildet und weist an seinen jeweils gegenüberliegenden Endbereichen zwei erste Befestigungselemente 120j und zwei zweite Befestigungselemente 122j auf. Das zweite Befestigungselement 122j ist als hakenförmiges Drehlagerelement ausgebildet. Durch das hakenförmige Drehlagerelement ist der Filterträger 100j an einem zweiten Sicherungselement 22j der Handwerkzeugmaschine 10j einhängbar ausgebildet. Das zweite Sicherungselement 22j der Handwerkzeugmaschine 10j ist beispielhaft als ein an das Gehäuse 12j angeformter Zapfen ausgebildet. Vorteilhaft ist das zweite Sicherungselement 22j der Handwerkzeugmaschine 10j am rückseitigen Ende der Handwerkzeugmaschine 10j, insbesondere im Bereich der Tüllenaufnahme, angeordnet. Das zweite Sicherungselement 22j der Handwerkzeugmaschine 10j ist vorteilhaft als ein Drehgelenk ausgebildet. Das zweite Sicherungselement 22j bildet eine durch das Gehäuse 12j der Handwerkzeugmaschine 10j vorgegebene Drehachse 2j, um die der Filterträger 100j schwenkbar an der Handwerkzeugmaschine 10j anbringbar ist.

Zu Befestigung des Filterträgers 100j an der Handwerkzeugmaschine 10j wird der Filterträger 100j solange in Richtung der Handwerkzeugmaschine 10j um die Drehachse 2j geschwenkt, bis ein Anschlagelement 111j des Filterträgers 100j das Gehäuse 12j der Handwerkzeugmaschine 10j beaufschlagt. Insbesondere ist der Filterträger 100j im befestigten Zustand zwischen dem zweiten Befestigungselement 122j und dem Anschlagselement 111j nahezu spielfrei an der Handwerkzeugmaschine 10j aufgenommen, wodurch eine weitere Schwenkbewegung verhindert wird. Im befestigten Zustand greift das erste Befestigungselement 120j des Filterträgers 100j in Form von federnden Rastelementen in korrespondierende Sicherungselemente 20j der Handwerkzeugmaschine 10j in Form von Taschen ein. Vorteilhaft sind die ersten Befestigungselemente 120j an länglichen Flügeln des Filterträgers 100j angeordnet. Es ist allerdings auch denkbar die ersten Befestigungselemente 120j an einem stirnseitigen Endbereich des Filterträgers 100j oder im Drehgelenk anzuordnen.

## Patentansprüche

1. Handwerkzeugmaschine (10,10c) mit einem Gehäuse (12,12c) und mit einem Filterträger (100,100c), wobei der Filterträger (100,100c) zumindest ein Filterträgerelement (102,102c) umfasst, welches zumindest eine Aufnahmeöffnung (104,104c) aufweist, die dazu ausgebildet ist, ein Filterelement (106,106c) aufzunehmen, und der Filterträger (100,100c) zumindest ein erstes Befestigungselement (120,120c) und zumindest ein zweites Befestigungselement (122,122c) zur lösbaren formschlüssigen und/oder kraftschlüssigen Befestigung des Filterträgers (100;100c) an jeweils korrespondierende Sicherungselemente (20,22;20c,22c) der Handwerkzeugmaschine (10,10c) aufweist, **dadurch gekennzeichnet, dass** der Filterträger (100,100c) über eine Betätigung einer Betätigungseinheit (130) lösbar befestigbar ausgebildet ist, wobei das erste Befestigungselement (120) am gegenüberliegenden Endbereich des Filterträgers (100) in Richtung seiner Längserstreckung (103) vorgespannt ist, wobei der Filterträger (100) im Wesentlichen entlang einer als Antriebsachse ausgebildeten Gehäuseachse (1) der Handwerkzeugmaschine (10) aufbringbar ist.

2. Handwerkzeugmaschine nach Anspruch 1, **dadurch gekennzeichnet, dass** das erste Befestigungselement (120) und das zweite Befestigungselement (122) an gegenüberliegenden Endbereichen des Filterträgers (100) angeordnet sind.

3. Handwerkzeugmaschine nach Anspruch 1 bis 2, **dadurch gekennzeichnet, dass** das erste und/oder das zweite Befestigungselement (120,122) des Filterträgers (100) als ein Formschlusselement ausgebildet ist.

4. Handwerkzeugmaschine nach Anspruch 1 bis 3, **dadurch gekennzeichnet, dass** das erste und/oder das zweite Befestigungselement (120,122) des Filterträgers (100) als ein Rastelement oder eine Rastaufnahmeöffnung, ausgebildet ist.

5. Handwerkzeugmaschine nach Anspruch 1 bis 4, **dadurch gekennzeichnet, dass** das erste und/oder zweite Befestigungselement (120,122) des Filterträgers (100) einstückig mit der Betätigungseinheit (130) ausgebildet ist.

6. Handwerkzeugmaschine nach Anspruch 1 bis 5, **dadurch gekennzeichnet, dass** die Betätigungseinheit (130) an dem Filterträger (100) angeordnet ist.

7. Handwerkzeugmaschine nach Anspruch 1 bis 4, **dadurch gekennzeichnet, dass** die Betätigungseinheit an der Handwerkzeugmaschine (10) angeordnet ist.

8. Handwerkzeugmaschine nach Anspruch 1 bis 7, **dadurch gekennzeichnet, dass** das erste Befestigungselement (120) des Filterträgers (100) als Rastelement ausgebildet ist und das zweite Befestigungselement (122) des Filterträgers (100) als ein Formschlusselement, insbesondere einem Führungselement ausgebildet ist, das dazu ausgebildet ist, den Filterträger (100) beim Aufbringen an die Handwerkzeugmaschine (10) zu führen und zusätzlich an der Handwerkzeugmaschine radial zu sichern und zu positionieren.

9. Handwerkzeugmaschine nach Anspruch 1 bis 8, **dadurch gekennzeichnet, dass** der Filterträger (100c) im Wesentlichen U-förmig ausgebildet ist.

10. Handwerkzeugmaschine nach Anspruch 1 bis 9, **dadurch gekennzeichnet, dass** der Filterträger ein elastisches Element (122c) aufweist, wobei das elastische Element (122c) dazu ausgebildet ist, den Filterträger (100c) an der Handwerkzeugmaschine (10c) in zumindest einer Richtung über eine Verspannung zu sichern.

11. Handwerkzeugmaschine nach Anspruch 1 bis 10, **dadurch gekennzeichnet, dass** das elastische Element (122c) entlang der Aufbringrichtung des Filterträgers (100c) derart elastisch verformbar ist, dass erst durch die Verformung des elastischen Elements (122c), insbesondere einer axialen Verlängerung des elastischen Elements (122c), zumindest eines der ersten Befestigungselemente (120c) des Filterträgers (100c) mit einem der ersten der Sicherungselementen (20c) der Handwerkzeugmaschine (10c) verbindbar sind.

12. Handwerkzeugmaschine nach Anspruch 1 bis 10, **dadurch gekennzeichnet, dass** das zu dem zweiten Befestigungselement (122) des Filterträgers (100) korrespondierende Sicherungselement (20) der Handwerkzeugmaschine (10) als Lufteinlassöffnung der Handwerkzeugmaschine (10) ausgebildet ist.

13. Handwerkzeugmaschine nach Anspruch 1 bis 10, **dadurch gekennzeichnet, dass** die Außenfläche des Filterträgers (10) im montierten Zustand bündig mit der Außenfläche des Gehäuses (12) der Handwerkzeugmaschine (10) ausgebildet ist.

14. Handwerkzeugmaschine nach dem Oberbegriff des Anspruchs 1, **dadurch gekennzeichnet, dass** der Filterträger (100j) um eine Drehachse (2j) schwenkbar an der Handwerkzeugmaschine (10j) anbringbar ist, wobei die Drehachse (2j) von einem Sicherungselement (22j) in Form eines Drehlagerelements der Handwerkzeugmaschine (10j) gebildet wird.

15. Handwerkzeugmaschine nach Anspruch 14, **dadurch gekennzeichnet, dass** zumindest ein erstes Befestigungselement (120j) als ein Rastelement ausgebildet ist und zumindest ein zweites Befestigungselement (122j) als ein hakenförmiges Drehlagerelement ausgebildet ist, wobei über das zweite Befestigungselement (122j) das Filterträgerelement (102j) an das korrespondierende Sicherungselement (22j) der Handwerkzeugmaschine (10j), insbesondere einen angeformten Zapfen, einhängbar ist.

16. Handwerkzeugmaschine nach Anspruch 14, **dadurch gekennzeichnet, dass** der Filterträger (100j) ein Anschlagelement (111j) aufweist, das dazu ausgebildet ist, die Schwenkbewegung zu begrenzen.

## Claims

1. Portable power tool (10, 10c) having a housing (12, 12c) and having a filter carrier (100, 100c), wherein the filter carrier (100, 100c) comprises at least one filter carrier element (102, 102c) that has at least one receiving opening (104, 104c) that is configured to receive a filter element (106, 106c), and the filter carrier (100, 100c) has at least one first fastening element (120, 120c) and at least one second fastening element (122, 122c) for fastening the filter carrier (100; 100c) releasably in a form-fitting and/or force-fitting manner to respectively corresponding securing elements (20, 22; 20c, 22c) of the portable power tool (10, 10c), **characterized in that** the filter carrier (100, 100c) is configured to be releasably fastenable via actuation of an actuating unit (130), wherein the first fastening element (120) is preloaded in the opposite end region of the filter carrier (100) in the direction of its longitudinal extent (103), wherein the filter carrier (100) is attachable substantially along a housing axis (1), in the form of a drive axis, of the portable power tool (10).

2. Portable power tool according to Claim 1, **characterized in that** the first fastening element (120) and the second fastening element (122) are arranged in opposite end regions of the filter carrier (100).

3. Portable power tool according to Claims 1 and 2, **characterized in that** the first and/or second fastening element (120, 122) of the filter carrier (100) is in the form of a form-fitting element.

4. Portable power tool according to Claims 1 to 3, **characterized in that** the first and/or the second fastening element (120, 122) of the filter element (100) is in the form of a latching element or of a latching receiving opening.

5. Portable power tool according to Claims 1 to 4, **characterized in that** the first and/or second fastening element (120, 122) of the filter carrier (100) is formed in one piece with the actuating unit (130) .

6. Portable power tool according to Claims 1 to 5, **characterized in that** the actuating unit (130) is arranged on the filter carrier (100).

7. Portable power tool according to Claims 1 to 4, **characterized in that** the actuating unit is arranged on the portable power tool (10).

8. Portable power tool according to Claims 1 to 7, **characterized in that** the first fastening element (120) of the filter carrier (100) is in the form of a latching element and the second fastening element (122) of the filter carrier (100) is in the form of a form-fitting element, in particular a guide element, which is configured to guide the filter carrier (100) during attachment to the portable power tool (10) and additionally to radially secure and position it on the portable power tool.

9. Portable power tool according to Claims 1 to 8, **characterized in that** the filter carrier (100c) is formed in a substantially U-shaped manner.

10. Portable power tool according to Claims 1 to 9, **characterized in that** the filter carrier has an elastic element (122c), wherein the elastic element (122c) is configured to secure the filter carrier (100c) to the portable power tool (10c) in at least one direction via bracing.

11. Portable power tool according to Claims 1 to 10, **characterized in that** the elastic element (122c) is elastically deformable along the attachment direction of the filter carrier (100c) such that it is only by the deformation of the elastic element (122c), in particular axial lengthening of the elastic element (122c), that at least one of the first fastening elements (120c) of the filter carrier (100c) is connectable to one of the first of the securing elements (20c) of the portable power tool (10c).

12. Portable power tool according to Claims 1 to 10, **characterized in that** the securing element (20), corresponding to the second fastening element (122) of the filter carrier (100), of the portable power tool (10) is in the form of an air inlet opening of the portable power tool (10).

13. Portable power tool according to Claims 1 to 10, **characterized in that** the outer face of the filter carrier (10) is formed, in the mounted state, in a manner flush with the outer face of the housing (12) of the portable power tool (10).

14. Portable power tool according to the preamble of Claim 1, **characterized in that** the filter carrier (100j) is attached to the portable power tool (10j) so as to be pivotable about an axis of rotation (2j), wherein the axis of rotation (2j) is formed by a securing element (22j) in the form of a rotary bearing element of the portable power tool (10j).

15. Portable power tool according to Claim 14, **characterized in that** at least one first fastening element (120j) is in the form of a latching element and at least one second fastening element (122j) is in the form of a hook-like rotary bearing element, wherein, via the second fastening element (122j), the filter carrier element (102j) is able to be mounted on the corresponding securing element (22j) of the portable power tool (10j), in particular an integrally formed stud.

16. Portable power tool according to Claim 14, **characterized in that** the filter carrier (100j) has a stop element (111j), which is configured to limit the pivoting movement.

## Revendications

1. Machine-outil portative (10, 10c) comprenant un boîtier (12, 12c) et un porte-filtre (100, 100c), dans laquelle le porte-filtre (100, 100c) comporte au moins un élément de porte-filtre (102, 102c), lequel comprend au moins une ouverture de réception (104, 104c) qui est réalisée pour recevoir un élément filtrant (106, 106c), et le porte-filtre (100, 100c) comprend au moins un premier élément de fixation (120, 120c) et au moins un deuxième élément de fixation (122, 122c) pour la fixation par complémentarité de forme et/ou à force libérable du porte-filtre (100 ; 100c) à des éléments de blocage respectivement correspondants (20, 22 ; 20c, 22c) de la machine-outil portative (10, 10c), **caractérisée en ce que** le porte-filtre (100, 100c) est réalisé de manière à pouvoir être fixé de manière libérable par le biais d'un actionnement d'une unité d'actionnement (130), le premier élément de fixation (120) étant précontraint au niveau d'une région d'extrémité opposée du porte-filtre (100) dans la direction de son étendue longitudinale (103), le porte-filtre (100) pouvant être appliqué sensiblement le long d'un axe de boîtier (1), réalisé en tant qu'axe d'entraînement, de la machine-outil portative (10).

2. Machine-outil portative selon la revendication 1, **caractérisée en ce que** le premier élément de fixation (120) et le deuxième élément de fixation (122) sont disposés au niveau de régions d'extrémité opposées du porte-filtre (100).

3. Machine-outil portative selon les revendications 1 et 2, **caractérisée en ce que** le premier et/ou le deuxième élément de fixation (120, 122) du porte-filtre (100) est/sont réalisé(s) sous la forme d'un élément à complémentarité de forme.

4. Machine-outil portative selon les revendications 1 à 3, **caractérisée en ce que** le premier et/ou le deuxième élément de fixation (120, 122) du porte-filtre (100) est/sont réalisé(s) sous la forme d'un élément d'encliquetage ou d'une ouverture de réception d'encliquetage.

5. Machine-outil portative selon les revendications 1 à 4, **caractérisée en ce que** le premier et/ou le deuxième élément de fixation (120, 122) du porte-filtre (100) est/sont réalisé(s) d'une seule pièce avec l'unité d'actionnement (130).

6. Machine-outil portative selon les revendications 1 à 5, **caractérisée en ce que** l'unité d'actionnement (130) est disposée sur le porte-filtre (100).

7. Machine-outil portative selon les revendications 1 à 4, **caractérisée en ce que** l'unité d'actionnement est disposée sur la machine-outil portative (10).

8. Machine-outil portative selon les revendications 1 à 7, **caractérisée en ce que** le premier élément de fixation (120) du porte-filtre (100) est réalisé sous forme d'élément d'encliquetage et le deuxième élément de fixation (122) du porte-filtre (100) est réalisé sous la forme d'un élément à complémentarité de forme, en particulier un élément de guidage qui est réalisé pour guider le porte-filtre (100) lors de l'application sur la machine-outil portative (10) et en outre pour le bloquer radialement et le positionner sur la machine-outil portative.

9. Machine-outil portative selon les revendications 1 à 8, **caractérisée en ce que** le porte-filtre (100c) est réalisé sensiblement en forme de U.

10. Machine-outil portative selon les revendications 1 à 9, **caractérisée en ce que** le porte-filtre comprend un élément élastique (122c), l'élément élastique (122c) étant réalisé pour bloquer le porte-filtre (100c) sur la machine-outil portative (10c) dans au moins une direction par le biais d'un serrage.

11. Machine-outil portative selon les revendications 1 à 10, **caractérisée en ce que** l'élément élastique (122c) est déformable de manière élastique le long de la direction d'application du porte-filtre (100c), de telle sorte qu'au moins l'un des premiers éléments de fixation (120c) du porte-filtre (100c) ne peut être relié à l'un des premiers éléments de blocage (20c) de la machine-outil portative (10c) que par la déformation de l'élément élastique (122c), en particulier un allongement axial de l'élément élastique (122c).

12. Machine-outil portative selon les revendications 1 à 10, **caractérisée en ce que** l'élément de blocage (20), correspondant au deuxième élément de fixation (122) du porte-filtre (100), de la machine-outil portative (10) est réalisé sous forme d'ouverture d'entrée d'air de la machine-outil portative (10).

13. Machine-outil portative selon les revendications 1 à 10, **caractérisée en ce que** la surface extérieure du porte-filtre (10) est réalisée en affleurement avec la surface extérieure du boîtier (12) de la machine-outil portative (10) à l'état monté.

14. Machine-outil portative selon le préambule de la revendication 1, **caractérisée en ce que** le porte-filtre (100j) peut être monté sur la machine-outil portative (10j) de manière pivotante autour d'un axe de rotation (2j), l'axe de rotation (2j) étant formé par un élément de blocage (22j) sous la forme d'un élément de palier rotatif de la machine-outil portative (10j).

15. Machine-outil portative selon la revendication 14, **caractérisée en ce qu'**au moins un premier élément de fixation (120j) est réalisé sous la forme d'un élément d'encliquetage et au moins un deuxième élément de fixation (122j) est réalisé sous la forme d'un élément de palier rotatif en forme de crochet, l'élément de porte-filtre (102j) pouvant être accroché à l'élément de blocage (22j) correspondant de la machine-outil portative (10j), en particulier à une goupille façonnée, par le biais du deuxième élément de fixation (122j).

16. Machine-outil portative selon la revendication 14, **caractérisée en ce que** le porte-filtre (100j) comprend un élément de butée (111j) qui est réalisé pour limiter le mouvement de pivotement.
